# EUROPEAN PATENT APPLICATION

(11) **EP 2 426 965 A1**
(43) Date of publication of application: **07.03.2012**
(21) Application number: 10761607.0
(22) Date of filing: 26.03.2010
(51) Int. Cl.: H04W 8/10, H04W 4/02, H04W 8/06, H04W 60/04, H04W 64/00, H04W 88/18

(54) **COMMUNICATIONS SYSTEM AND COMMUNICATIONS METHOD**

(30) Priority: 06.04.2009 JP 2009092219; 06.04.2009 JP 2009092220
(71) Applicant: NTT DOCOMO, INC., Chiyoda-ku Tokyo 100-6150 (JP)
(72) Inventor: SUZUKI Toshihiro, Tokyo 100-6150 (JP); OKAJIMA Ichiro, Tokyo 100-6150 (JP); KAWAKAMI Hiroshi, Tokyo 100-6150 (JP); OKAMOTO Takeshi, Tokyo 100-6150 (JP); OCHI Daisuke, Tokyo 100-6150 (JP); HONDA Yasuyuki, Tokyo 100-6150 (JP); YOKOYAMA Kengo, Tokyo 100-6150 (JP); TERAYAMA Takeshi, Tokyo 100-6150 (JP); JO Manhee, Tokyo 100-6150 (JP); NAGATA Tomohiro, Tokyo 100-6150 (JP); KOBAYASHI Motonari, Tokyo 100-6150 (JP); OYABU Yuki, Tokyo 100-6150 (JP)
(74) Representative: Viering, Jentschura & Partner
(86) International application number: PCT/JP2010/055445
(87) International publication number: WO 2010/116907

(57) **Abstract**

The present invention aims to provide a communications system and a communications method that enable to collect location information without imposing a load on the network.

In an RNC 300 of a communications system 10, when a communication controlling module 302 performs communication connection processing to a mobile station 100 among a plurality of mobile stations 100, a positioning module 301 measures the location of the mobile station 100 and the communication controlling module 302 transmits location information of the mobile station 100 to an exchange 400 when communication is connected with the mobile station 100. In the exchange 400, a communication controlling module 401 receives the location information transmitted from the RNC 300 and a storage module 403 stores the received location information. Then, in response to a request from a management center 500, the exchange 400 transmits the location information stored in the storage module 403.

## Description

### Technical Field

The present invention relates to a communications system and a communications method that perform collecting location information of a mobile station.

### Background Art

A method for collecting location information is specified in the 3GPP, for example, where upon receiving a request from an external server to collect location information of each mobile station, a management server of a carrier operator outputs, in accordance with the request, an instruction to collect the location information of each mobile station to an exchange (for example, a mobile multimedia switching system (MMS) a serving/gateway general packet radio service support node (xGSN) and a radio network controller (RNC)) and each node and the controller perform processing to collect the location information. This processing sequence is specified in the 3rd generation partnership project (3GPP) as a mobile terminated-location request (MT-LR) method and is described in Non Patent Literature 1, the 3rd generation partnership project (3GPP) TS23.271, for example.

### Citation List

### Non Patent Literature

Non Patent Literature 1: 3rd generation partnership project (3GPP) TS23.271

### Summary of Invention

### Technical Problem

However, in a technology described in Non-Patent Literature 1, for example, in response to a request from an external server an exchange outputs an instruction request to an RNC and the RNC further performs processing with each mobile station, therefore, a load is imposed on a network. Since there are more than 1,000 pieces of RNCs, the load with respect to the RNC is particularly imposed on the network.

An object of the present invention is to provide a communications system and a communications method that enable to collect location information without imposing a load on the network.

### Solution to Problem

In order to solve the problems described above, a communications system of the present invention includes: a plurality of communication control apparatuses for controlling wireless connection to a plurality of mobile stations; and a management apparatus managing the communication control apparatus. The communication control apparatus includes: positioning means for measuring location of a mobile station, when communication is connected to the mobile station among the plurality of mobile stations, the mobile station; and transmitting means at a communication control apparatus side for transmitting, when communication is connected to the mobile station, location information of the mobile station measured by the positioning means to the management apparatus. The management apparatus includes receiving means for receiving the location information transmitted by the transmitting means; storage means for storing the location information received by the receiving means; and transmitting means at a management apparatus side for transmitting the location information stored in the storage means in response to a request from an external server or at a given timing.

In addition, a communications method of the present invention executed on a communications system including a plurality of communication control apparatuses for controlling wireless connection to a plurality of mobile stations, and a management apparatus for managing the communication control apparatus, the communication control apparatus includes: a positioning step of measuring location of a mobile station, when communication is connected to the mobile station of the plurality of mobile stations, the mobile station; and a transmitting step at a communication control apparatus side of transmitting, when communication is connected to the mobile station, location information of the mobile station measured by the positioning means to the management apparatus, the management apparatus, includes a receiving step of receiving the location information transmitted at the transmitting step; a storage step of storing the location information received at the receiving step in storage means; and a transmitting step at a management apparatus, side of transmitting the location information stored in the storage means in response to a request from an external server or at a given timing.

In the communication control system and the communications method of the present invention, the management apparatus is preferably an exchange.

Alternatively, in the communication control system and the communications method of the present invention, the management apparatus is preferably a subscriber information management apparatus (for example, a visitor location register).

According to the invention, when communication is connected to a mobile station of a plurality of mobile stations, the communication control apparatus measures location of the mobile station and transmits location information thereof to the management apparatus. Then, the management apparatus receives the location information transmitted from the communication control apparatus and stores the received location information. Then, in response to a request from an external server, the stored location information is transmitted. Thereby, when communication is connected between the communication control apparatus and the management apparatus, it is possible to transmit the location information of the mobile station and it is possible to collect the location information in the management apparatus without imposing a load on network traffic. The number of management apparatuses is generally small and it is only necessary to access the management apparatus to collect location information, therefore, it is possible to reduce a load on the network when the location information of each mobile station is collected.

Furthermore, in the communications system of the present invention, the transmitting means at the communication control apparatus side preferably transmits the location information by including the location information of the mobile station in an initial UE message.

According to the invention, by including the location information of the mobile station in the initial UE message, the communication control apparatus is capable of transmitting the location information to the management apparatus side when communication connection is processed between the communication control apparatus and the management apparatus. Accordingly, it is possible to collect the location information of the mobile station to the management apparatus without imposing a load on the network.

Furthermore, in the communications system of the present invention, the transmitting means at the communication control apparatus side preferably transmits the location information during handover by including the location information of the mobile station in a location report signal.

According to the invention, by including the location information of the mobile station in the location report signal, the communication control apparatus is capable of transmitting the location information to the management apparatus side during handover between the communication apparatus and the management apparatus. Accordingly, it is possible to collect the location information of the mobile station to the management apparatus without imposing a load on the network.

Furthermore, in the communications system of the present invention, transmitting means at the communication control apparatus side in the communication control apparatus may transmit an ID for identifying the mobile station in association with the location information to the management apparatus,, and the receiving means at the management apparatus, may receive the ID together with the location information, the management apparatus preferably further includes subscriber information storage means for storing subscriber information having the ID and a telephone number in association with each other; and converting means for converting the ID received by the receiving means to the telephone number based on the subscriber information stored in the subscriber information storage means, the storage means preferably stores the telephone number converted by the converting means together with the location information.

According to the invention, the management apparatus is capable of storing the subscriber information having the ID and the telephone number previously in association with each other; of performing conversion to the telephone number based on the ID transmitted from the communication control apparatus; and of storing the converted telephone number together with the location information. Thereby, it is possible to notify an external server of the telephone and the location information in association with each other.

Furthermore, in the communications system of the present invention, the subscriber information storage means preferably further stores a positioning time in an associated manner.

According to the present invention, by storing the positioning time, it is possible to grasp a motion path of the mobile station with the passage of time.

Furthermore, in the communications system of the present invention, the location information is preferably represented by coordinate information in a sector. Thereby, it is possible to grasp more accurate location information.

In order to solve the problems described above, a communications system of the present invention includes: a plurality of communication control apparatuses for controlling wireless connection to a plurality of mobile stations; and a management apparatus for managing the communication control apparatus. The communication control apparatus includes: acquiring means at a communication control apparatus side for acquiring, based on communication connection processing to a mobile station, location information of the mobile station; and transmitting means at the communication control apparatus side for transmitting, when the mobile station performs communication connection processing, the location information of the mobile station acquired by the acquiring means at the communication control apparatus side to the management apparatus. The management apparatus includes: receiving means at a management apparatus side for receiving the location information transmitted by the transmitting means; storage means for storing the location information received by the receiving means at the management apparatus side; and transmitting means at the management apparatus side for transmitting the location information stored in the storage means in response to a request from an external server or at a given timing. The management apparatus may be an exchange or may be a subscriber management apparatus.

In addition, a communications method of the present invention executed on a communications system including a plurality of communication control apparatuses for controlling wireless connection to a plurality of mobile stations, and a management apparatus for managing the communication control apparatus and subscriber information of the plurality of mobile stations, the communication control apparatus includes: an acquiring step at a communication control apparatus side of acquiring, based on communication connection processing to a mobile station, location information of the mobile station; and a transmitting step at the communication control apparatus side of transmitting, when the mobile station performs communication connection processing, the location information of the mobile station acquired at the acquiring step at the communication control apparatus side to the management apparatus; the management apparatus includes: a receiving step at a management apparatus side of receiving the location information transmitted at the transmitting step; a storage step of storing the location information received at the receiving step at the management apparatus side; and a transmitting step at the management apparatus side of transmitting the location information stored at the storage step in response to a request from an external server or at a given timing.

According to the invention, in the communication control apparatus, based on communication connection processing to a mobile station, location information of the mobile station is acquired and the acquired location information of the mobile station is transmitted to the management apparatus when the mobile station performs communication connection processing. Then, the management apparatus receives the transmitted location information and stores the received location information. Thereafter, in response to a request from an external server or at a given timing, the stored location information is transmitted. Thereby, when communication is connected between the communication control apparatus and the management apparatus, it is possible to transmit the location information of the mobile station and it is possible to collect the location information to the management apparatus without imposing a load on network traffic. The number of management apparatuses is generally small and it is only necessary to access the management apparatus to collect location information, therefore, it is possible to reduce a network load when the location information of each mobile station is collected.

Furthermore, in the communications system of the present invention, the location information is preferably a sector ID. Thereby, a location of each mobile station is able to be managed by the sector ID and a processing configuration may be made simple.

### Advantageous Effects of Invention

According to the present invention, when communication is connected between the communication control apparatus and the exchange, it is possible to transmit location information of a mobile station and collect the location information in the exchange without imposing a load on network traffic. The number of exchanges is generally smaller than that of the communication control apparatus and it is only necessary to access the exchange to collect location information, therefore, it is possible to reduce a network load when the location information of each mobile station is collected.

### Brier Description of Drawings

[Fig. 1] Fig. 1 is a system block diagram of a communications system 10 of the present embodiment.
[Fig. 2] Fig. 2 is a block diagram illustrating a functional configuration of an RNC 300 and an exchange 400.
[Fig. 3] Fig. 3 is a sequence diagram illustrating processing of a mobile station 100, the RNC 300, the exchange 400 and a management center S00 in the communications system 10.
[Fig. 4] Fig. 4 is a diagram describing a relationship between a BTS 200 and sectors.
[Fig. 5] Fig. 5 is a system block diagram of the communications system 10 of the present embodiment.
[Fig. 6] Fig. 6 is a block diagram illustrating a functional configuration of the RNC 300 and the exchange 400a.
[Fig. 7] Fig. 7 is a sequence diagram illustrating processing of the mobile station 100, the RNC 300, a VRL 400a and the management center 500 in the communications system 10.
[Fig. 8] Fig. 8 is a diagram describing a relationship between the BTS 200 and sectors.
[Fig. 9] Fig. 9 is a diagram describing an exemplary management table of subscriber information managed by the VLR 400a.
[Fig. 10] Fig. 10 is a system block diagram of a communications system of a third embodiment.
[Fig. 11] Fig. 11 is a system block diagram of the communications system of a fourth embodiment.

### Reference Signs List

10... communications system, 100 ...mobile station, 301... positioning module, 302... communication controlling module, 400... exchange,401... communication controlling module, 402... converting module, 403... storage module, 401x... communication controlling module, 402x... converting module, 403x... storage module, 500... management center, 501... social sensor unit, 502... peta-mining unit, 503... mobile demography unit, 504... visualization solution unit, 600... subscriber profile information storage module

### Description of Embodiments

With reference to accompanying drawings, embodiments of the present invention will be described. Whenever possible, the same reference sign is given to the same part and redundant explanation will be omitted.

### [First Embodiment]

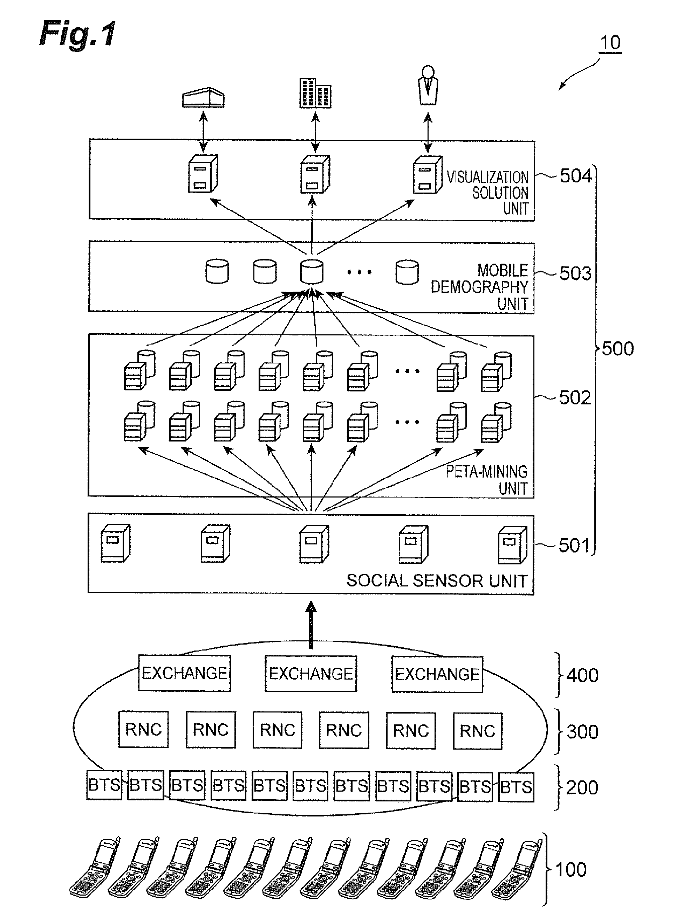

Fig. 1 is a system block diagram of a communications system 10 of the first embodiment. As illustrated in Fig. 1, the communications system 10 is configured to include mobile stations 100, BTSs (Base Transceiver Stations) 200, RNCs (Radio Network Controllers) 300, exchanges 400, and a management center 500. Moreover, the management center 500 is configured with social sensor units 501, peta-mining units 502, mobile demography units 503, and visualization solution units 504.

The exchange 400 collects location information of the mobile station 100 through the BTS 200 and the RNC 300. The RNC 300 is a communication control apparatus capable of measuring the location of the mobile station 100 by using a delay value in a RRC connection request signal, when communication is connected (for example, connection processing during transmission, reception, location registration and handover) with the mobile station 100. The exchange 400 is capable of receiving the location information of the mobile station 100 thus measured when the mobile station 100 performs communication connection. The exchange 400 stores the received location information and outputs the collected location information to the management center 500 at a given timing or in response to a request from the management center 500. Here, the RNC 300 is generally constituted by about 1,000 pieces thereof and arranged all over Japan. On the other hand, the exchange 400 is constituted by about 300 pieces thereof and arranged in Japan.

Moreover, as described above, the management center 500 is configured to include the social sensor units 501, the peta-mining units 502, the mobile demography units 503, and the visualization solution units 504 and in each unit, statistical processing is performed with the location information of the mobile stations 100.

Each of the social sensor units 501 is a server apparatus for collecting data including the location information of the mobile station 100 and the like from each exchange 400. The social sensor unit 501 is configured to be capable of receiving data regularly output from the exchange 400 and of acquiring data from the exchange 400 at a timing predetermined by the social sensor unit 501.

Each of the peta-mining units 502 is a server apparatus for converting the data received from the social sensor unit 501 to a given data form. For example, the peta-mining unit 502 performs sorting processing by a user ID and performs sorting processing by each area.

Each of the mobile demography units 503 is a server apparatus for performing aggregation processing of the data processed in the peta-mining unit 502, that is for performing counting processing in each item. For example, the mobile demography unit 503 is capable of counting the number of users located in a certain area and of aggregating a distribution of user locations.

Each of the visualization solution units 504 is a server apparatus for performing processing to visualize the data aggregation processed in the mobile demography unit 503. For example, the visualization solution unit 504 is capable of performing processing to map the aggregated data on a map. The data processed in the visualization solution unit 504 is provided to businesses, public sectors, individuals and the like and used for store development, a road traffic survey, disaster measures, environmental measures and the like. Those statistically processed information are, of course, processed not to violate privacy such that an individual or the like is unable to be identified.

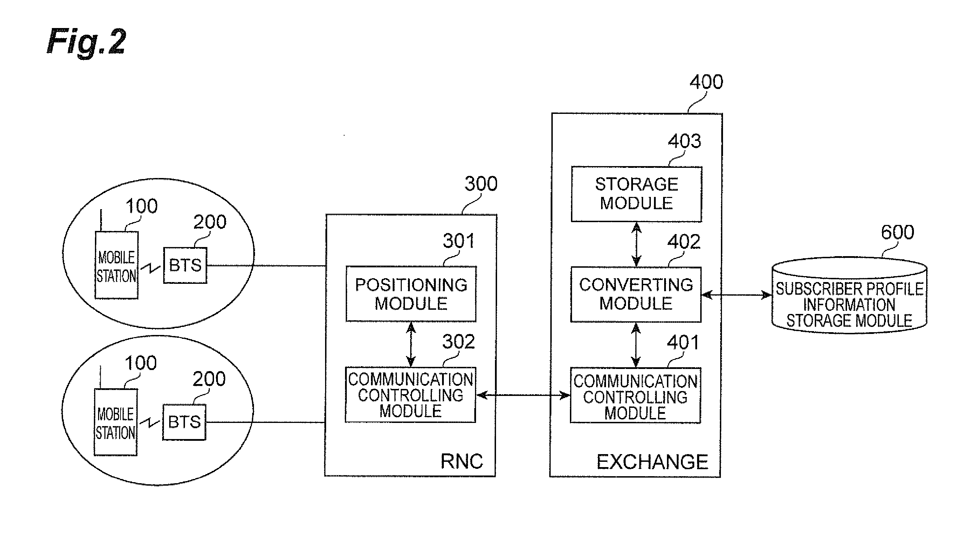

Next, a configuration of the RNC 300 and the exchange 400 will be described. Fig. 2 is a block diagram illustrating the functional configuration of the RNC 300 and the exchange 400. The RNC 300 is configured to include a positioning module 301 and a communication controlling module 302. Moreover, the exchange 400 is configured to include a communication controlling module 401, a converting module 402 and a storage module 403.

First, the RNC 300 will be described. When the communication controlling module 302 performs communication connection to the mobile station 100 through a BTS 200, the positioning module 301 is a module that measures a location (coordinate) where the mobile 100 is being located in a sector regarding a BTS 200, based on a delay value occurring in processing using a RRC connection request signal. The RNC 300 is capable of measuring a location in the sector by performing so-called PRACHPD positioning calculations. The sector as referred to herein indicates a region obtained by equally dividing a communication area of the BTS 200 into a plurality of regions.

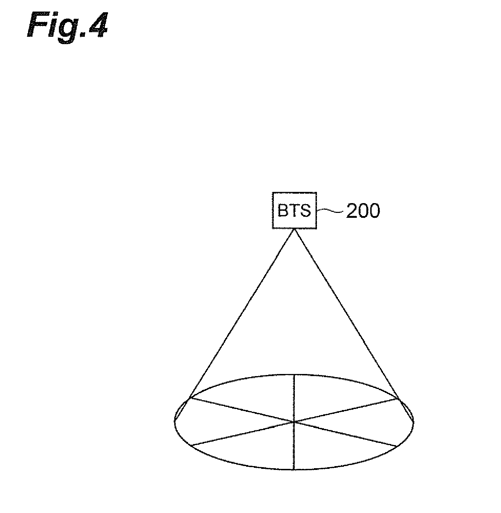

Fig. 4 is a diagram describing a relationship between the BTS 200 and sectors. The BTS 200 is situated at a center of a region indicated with a circle and the sectors are obtained by equally dividing the region into a plurality of pieces around the center. For example, in Fig. 4, the communication area of the BTS 200 is formed by up to six sectors and the RNC 300 is capable of grasping in which sector the mobile station 100 is being located, through the BTS 200. In the present embodiment, it is further possible to calculate, based on a signal delay obtained by performing processing a RRC connection request, at which location in the sector the mobile station 100 is being located, that is a geographical area ID (GAI). Here, a sector ID is allocated to each sector, and based on the sector ID and the location in the sector, the location of the mobile station 100 can be identified uniquely. Depending on a measurements environment, there are cases that the positioning module 301 is unable to perform PRACHPD positioning. In that case, the center coordinate of a sector is notified as the GAI.

The communication controlling module 302 is a module for performing communication connection to the mobile station 100 through the BTS 200 and the module, for example, for performing communication connection processing based on transmission processing or reception processing by the mobile station 100 and communication connection processing based on a location registration request. In the present embodiment, the communication controlling module 302 can further add location information of the mobile station 100 to an initial UE message to be used for communication connection processing and transmit it to the exchange 400. The initial UE message includes instruction information indicating a transmission or location registration request, a temporary ID uniquely identifying the mobile station 100 and location information. The temporary ID means ID information put out from the exchange 400 when the mobile station 100 is connected to a network.

Next, the exchange 400 will be described. The communication controlling module 401 is a module for receiving the initial UE message transmitted from the RNC 300 and for performing communication connection processing by using the initial UE message.

The converting module 402 is a module for converting the temporary ID included the initial UE message received by the communication controlling module 401 into a telephone number. In conversion processing, the converting module 402 extracts the telephone number in association with the temporary ID from a subscriber profile information storage module 600 for storing subscriber profile information and performs conversion to the telephone number thus extracted. The subscriber profile information storage module 600 is included in a home location register (HLR), and for example, the temporary IDs are managed and stored in association with the telephone numbers.

The storage module 403 is a module for storing the telephone number converted by the converting module 402; the location information of the mobile station 100 included in the initial UE message; and a time when the location information is measured in association with one another. The location information stored in the storage module 403 is collected at a given timing or in response to a request from the management center 500 in accordance with communication processing by the communication controlling module 401.

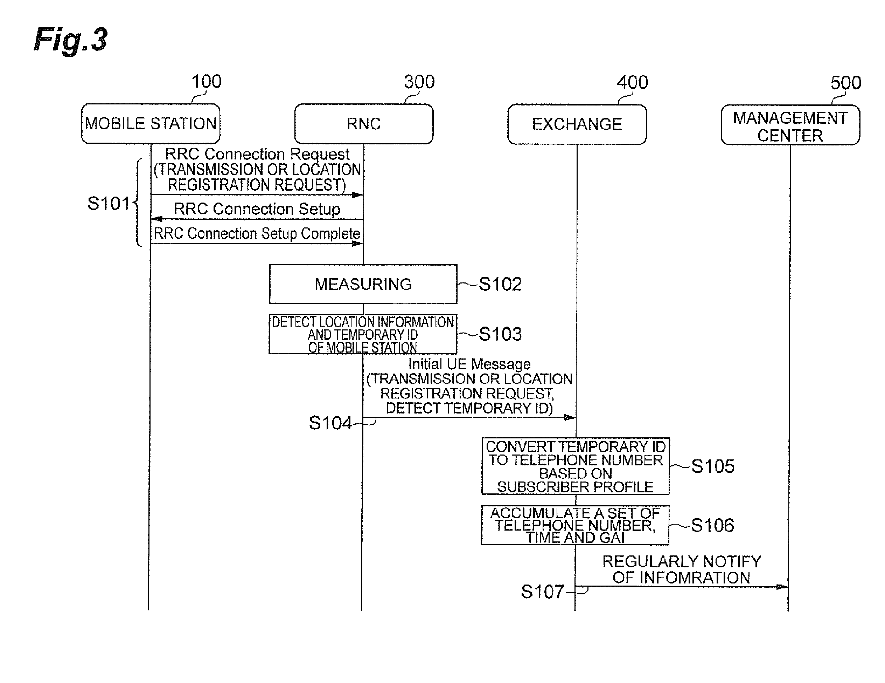

Next, processing of the communications system 10 thus configured will be described. Fig. 3 is a sequence diagram illustrating processing of the mobile station 100, the RNC 300, the exchange 400 and the management center 500 in the communications system 10.

When a transmission request or a location registration request is output from the mobile station 100, measurements of the location of the mobile station 100 is performed in accordance with such a request in the RNC 200 (S101). That is, when a RRC connection request is received by the RNC 200 (communication controlling module 302), in response to the request, a RRC connection set-up is transmitted from the communication controlling module 302 to the mobile station 100. Then, a completion signal of the RRC connection set-up from the mobile station 100 is received by the communication controlling module 302 (S101). Based on a signal delay value obtained here, approximate location information in the sector of the mobile station 100 is calculated by the positioning module 301 and measurements of the location is performed (S102).

Then, in the RNC 300, the location information of the mobile station 100 and its temporary ID are extracted by the communication controlling module 302 (S103). The location information and the temporary ID that are extracted by the communication controlling module 302 are added to the initial UE message and transmitted to the exchange 400 (S104).

In the exchange 400, the initial UE message is received by the communication controlling module 401 and the temporary ID included in the initial UE message is converted by the converting module 402 to the telephone number of the mobile station 100 (S105). Then, the converted telephone number, a positioning time and the location information are stored in association with one another (S106).

The telephone number, the positioning time and the location information that are stored in the storage module 403 are regularly transmitted by the management center 500, or, are acquired in accordance with a request from the management center 500 (S107).

In this way, it is possible to notify a management center 500 of the location information of the mobile station by using the initial UE message, but is not limited thereto. For example, as a modification of the present embodiment, the communication controlling module 302 may use a location report signal, in place of the initial UE message, to notify of the temporary ID and the location information of the mobile station 100 during handover. The location report signal is a signal specified in 3GPP TS25.413. In that case, the exchange 400 is, as a matter of course, configured to be capable of receiving the location report signal.

Next, an operation and effect of the communications system 10 thus configured will be described. In the RNC 300 of the communications system 10 of the present embodiment, when the communication controlling module 302 performs communication connection processing to a mobile station 100 among a plurality of mobile stations 100, the positioning module 301 measures the location of the mobile station 100 and the communication controlling module 302 transmits location information of the mobile station 100 to the exchange 400 when communication is connected with the mobile station 100. The location information is information (GAI) indicating an approximate location in the sector where the mobile station 100 is being located.

On the other hand, in the exchange 400, the communication controlling module 401 receives the location information transmitted from the RNC 300 and the storage module 403 stores the received location information. Then, in response to a request from the management center 500, the exchange 400 transmits the location information stored in the storage module 403. Thereby, when communication is connected between the RNC 300 and the exchange 400, it is possible to transmit the location information of the mobile station 100 and to collect the location information in the exchange without imposing a load on network traffic. The number of exchanges is generally smaller than that of the RNC 300 and it is only necessary to access the exchanges to collect location information, therefore, it is possible to reduce a load on the network when the location information of each mobile station is collected.

Here, in the RNC 300, by including the location information of a mobile station 100 in the initial UE message to be transmitted when communication connection processing with the exchange 400 is performed, the communication controlling module 302 is capable of collecting the location information of the mobile station 100 in the exchange 400 without imposing a load on the network.

Moreover, the exchange 400 in the present embodiment accesses the subscriber profile information storage module 600 that stores subscriber information having the temporary ID and the telephone number previously in association with each other, so that the converting module 402 is capable of converting the temporary ID transmitted from the RNC 300 to the telephone number. Then, the storage module 403 is capable of storing the converted telephone number with the location information. Thereby, it is possible to notify an external server of the telephone number and the location information that are in association with each other. By further storing time information indicating a positioning time together, it is possible to grasp a migration path of the mobile station with the passage of time.

The present embodiment is described on the assumption that the third-generation cellular phone (3G) system is used, but may also be applicable to the global system for mobile communications (GSM).

### [Second Embodiment]

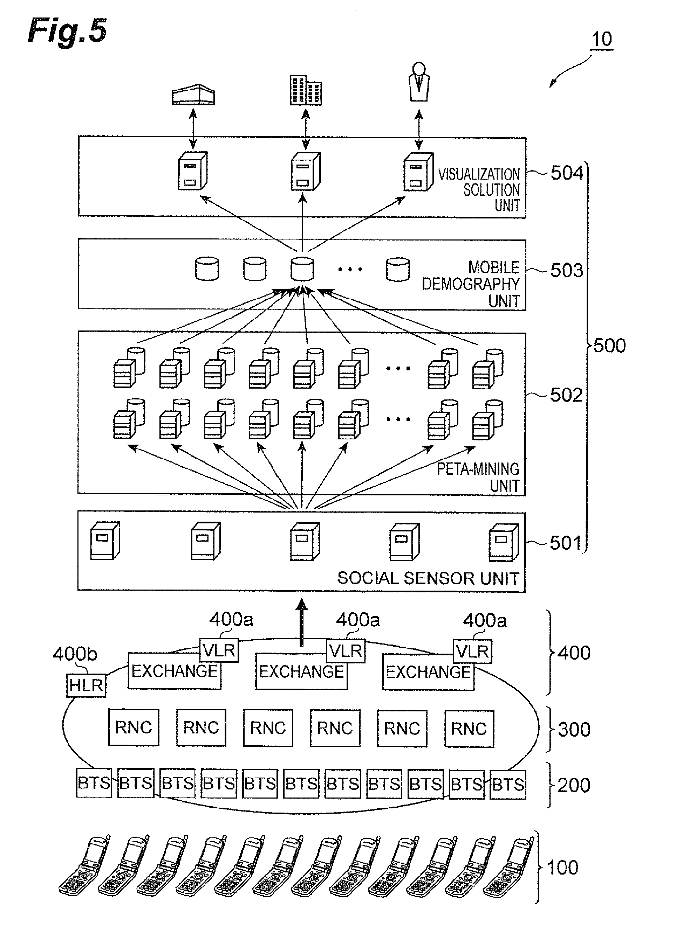

Fig. 5 is a system block diagram of the communications system 10 of the present embodiment. As illustrated in Fig. 5, the communications system 10 is configured to include a mobile station 100, BTSs (base transceiver stations) 200, RNCs (Radio network controllers) 300, exchanges 400, and a management center 500. Moreover, the management center 500 is configured with social sensor units 501, peta-mining units 502, mobile demography units 503, and visualization solution units 504.

Each of the exchanges 400 collects location information of the mobile station 100 through the BTSs 200 and the RNCs 300. In the present embodiment, the exchange 400 includes a visitor location register (VLR) 400a. The VLR 400a is a management apparatus for storing and managing the location information of the mobile station 100 and is capable of managing each mobile station 100 by acquiring and storing subscriber information stored in a HLR 400b. When communication is connected (for example, connection processing during transmission, reception, and handover) with the mobile station 100, the RNC 300 is capable of using a delay value occurring in processing a RRC connection request signal to measure the location of the mobile station 100. The exchange 400 is capable of receiving location information of the mobile station 100 thus measured when the mobile station 100 performs communication connection. The exchange 400 stores the received location information and outputs the collected location information at a given timing or in response to a request from the management center 500 to the management center 500. Here, the RNC 300 is generally constituted by about 1,000 pieces thereof and arranged all over Japan. On the other hand, the exchange 400 is constituted by about 300 pieces thereof and arranged in Japan.

As described above, the management center 500 is configured to include the social sensor units 501, the peta-mining units 502, the mobile demography units 503, and the visualization solution units 504 and in each unit, statistical processing is performed with the location information of the mobile stations100.

Each of the social sensor units 501 is a server apparatus for collecting data including the location information of the mobile station 100 and the like from each exchange 400. The social sensor unit 501 is configured to be capable of receiving data regularly output by the exchange 400 and of acquiring data from the exchange 400 at a timing predetermined in the social sensor unit 501.

Each of the peta-mining units 502 is a server apparatus for converting the data received from the social sensor unit 501 to a given data form. For example, the peta-mining unit 502 performs sorting processing by a user ID or performs sorting processing by each area.

Each of the mobile demography units 503 is a server apparatus for performing aggregation processing of the data processed in the peta-mining unit 502, that is for performing counting processing in each item. For example, the mobile demography unit 503 is capable of counting the number of users being located in a certain area and of aggregating location distribution.

Each of the visualization solution units 504 is a server apparatus for performing processing to visualize the data aggregation processed in the mobile demography unit 503. For example, the visualization solution unit 504 is capable of performing processing to map the statistically processed data on a map. The data processed in the visualization solution unit 504 is provided for businesses, public sectors, individuals and the like to be used for store development, a road traffic survey, disaster measures, environmental measures and the like. As a matter of course, those statistically processed information are processed not to violate privacy such that an individual or the like is unable to be identified.

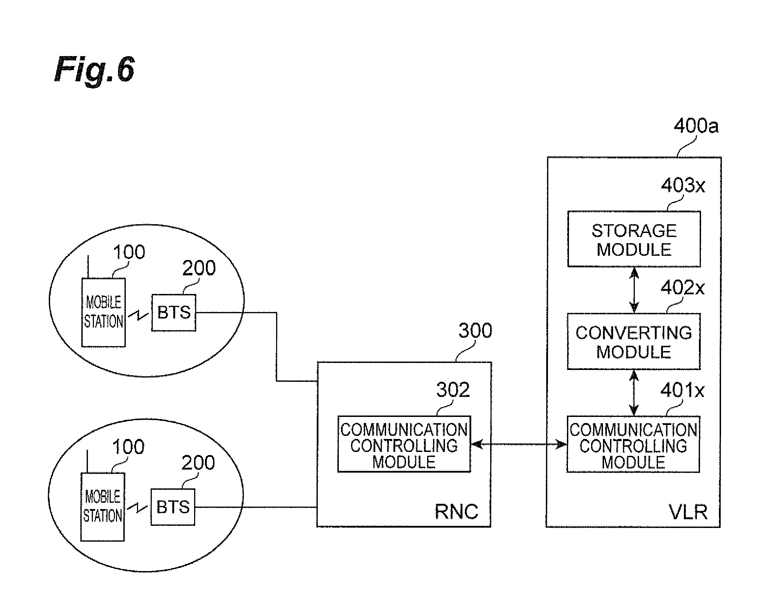

Next, a configuration of the RNC 300 and the VLR 400a will be described. Fig. 6 is a block diagram illustrating the functional configuration of the RNC 300 and the VLR 400a. The RNC 300 is configured to include the communication controlling module 302. Moreover, the VLR 400a is configured to include a communication controlling module 401 x, a converting module 402x, and a storage module 403x.

First, the RNC 300 will be described. The communication controlling module 302 is a module for performing communication connection through the BTS 200 to the mobile station 100 and the module for performing communication connection processing based on transmission processing or receiving processing from the mobile station 100 and communication connection processing based on a location registration request, for example. In the present embodiment, the communication controlling module 302 is further capable of adding location information of the mobile station 100 to an initial UE message to be used for communication connection processing and of transmitting to the VLR 400a. The initial UE message includes instruction information indicating a transmission or location registration request, a temporary ID to uniquely identify the mobile station 100 and a SAI (or GAI (location information)). The temporary ID as referred to here is ID information put out from the exchange 400 when the mobile station 100 connects to a network.

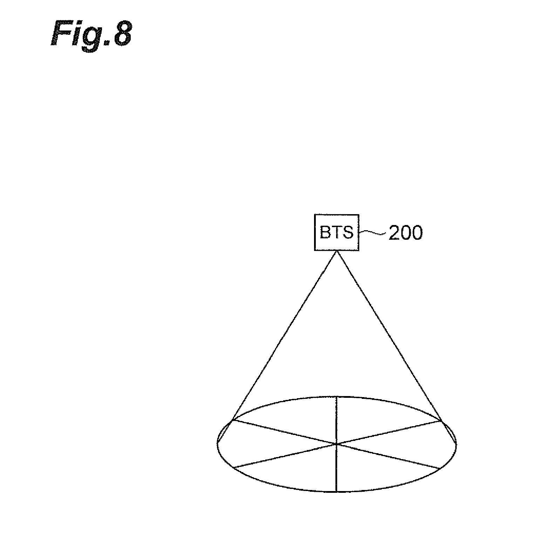

The communication controlling module 302 is capable of receiving from the BTS 200 a sector ID where the mobile station 100 is being located. Fig. 8 is a diagram describing a relationship between the BTS 200 and sectors. The BTS 200 is situated at the center of a region indicated with a circle and the sectors are obtained by equally dividing the region into a plurality of pieces around the center. For example, in Fig. 8, a communication area of the BTS 200 is formed by up to six sectors and the RNC 300 is capable of grasping through the BTS 200 in which sector the mobile station 100 is being located. For example, the RNC 300 is capable of grasping the subscriber area ID (SAI) indicating the sector ID and capable of notifying the VLR 400a of the SAI.

Furthermore, In the present embodiment, based on a signal delay obtained by performing processing of the RRC connection request, in which location in the sector the mobile station 100 is being located, a geographical area ID (GAI) thereof, may be calculated. That is, based on the sector ID and the location in the sector, the location of the mobile station 100 may be identified uniquely.

Next, the VLR 400a will be described. The communication controlling module 401x is a module for receiving the initial UE message transmitted from the RNC 300 and the module for performing communication connection processing by using the initial UE message.

The converting module 402x is a module for converting a temporary ID included in the initial UE message received by the communication controlling module 401x to a telephone number. In conversion processing, the converting module 402x extracts the telephone number in association with the temporary ID from the subscriber profile information storage module 600 for storing subscriber profile information and performs conversion to the extracted telephone number. The subscriber profile information storage module 600 is included, for example, in a home location register (HLR) and the temporary IDs are managed and stored in association with the telephone numbers.

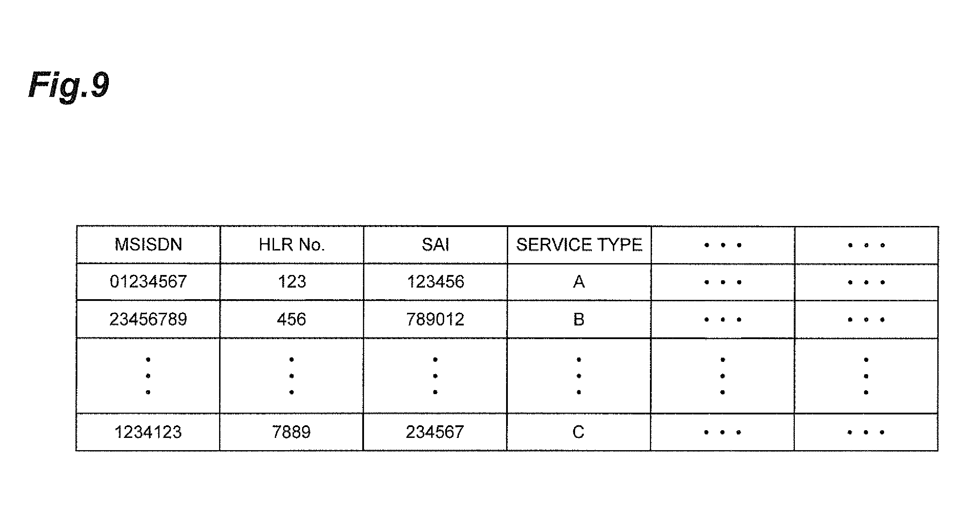

The storage module 403x is a module for storing the telephone number, the SAI of the mobile station 100 included in the initial UE message and a time when the SAI is acquired in association with one another. The SAI stored in the storage module 403x is collected in accordance with communication processing by the communication controlling module 401x at a given timing or in response to a request from the management center 500. The storage module 403x performs storage, for example, in a form as illustrated in Fig. 9. Fig. 9 is a diagram describing an example of a management table of subscriber information managed by the VLR 400a. As illustrated in Fig. 9, a MSISDN (telephone number), a HLR number, the SAI and a service type (communication service and the like that are available to provide for the mobile station) are stored in association with one another.

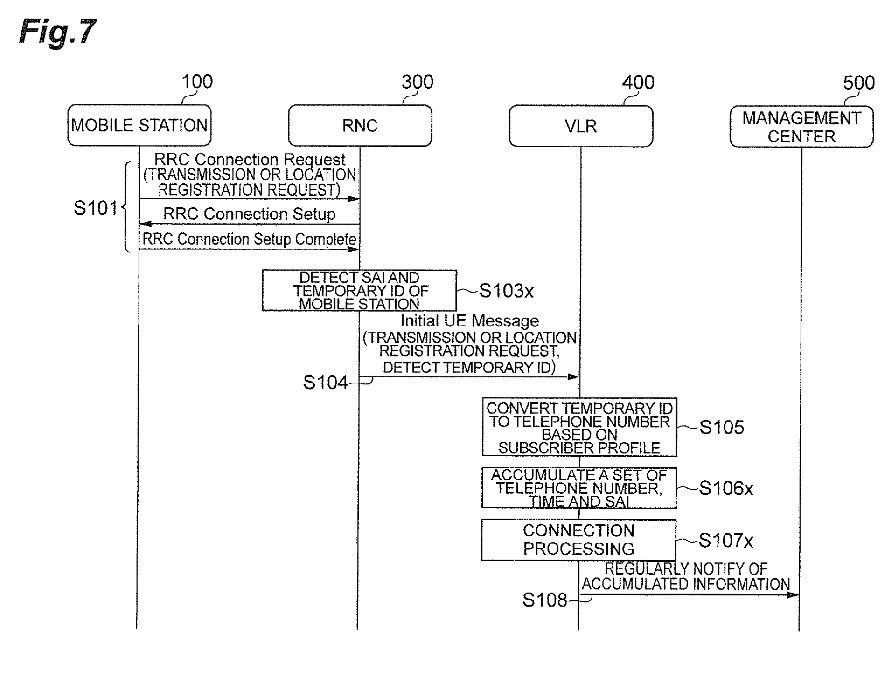

Next, processing in the communications system 10 thus configured will be described. Fig. 7 is a sequence diagram illustrating processing by the mobile station 100, the RNC 300, the VLR 400a and the management center 500 in the communications system 10.

When a transmission request or a location registration request is output from the mobile station 100, in the RNC 300, the SAI (sector ID) indicating a location where the mobile station 100 is being located is acquired in response to the request from the base transceiver station 200 (S101). If mesurement of location is performed in place of acquisition of the location where the mobile station 100 is being located, when a RRC connection request is received by the RNC 300 (communication controlling module 302), in response to the request a RRC connection set-up is transmitted from the communication controlling module 302 to the mobile station 100. Then, a completion signal of the RRC connection set-up from the mobile station 100 may be received by the communication controlling module 302. Based on a signal delay value obtained here, approximate location information of the mobile station 100 in the sector is calculated by the positioning module and measurements of the location is performed.

Then, in the RNC 300, the SAT that is the sector ID where the mobile station 100 is being located and the temporary ID indicating the mobile station 100 are extracted by the communication controlling module 302 (S103x). The acquired SAI and temporary ID are added to the initial UE message and transmitted to the VLR 400a by the communication controlling module 302 (S104).

In the VLR 400a, the initial UE message is received by the communication controlling module 401x and the temporary ID included in the initial UE message is converted to the telephone number of the mobile station 100 by the converting module 402x (S105). Then, the telephone number thus converted, a SAI acquired time, and the SAI are stored in association with one another in the storage module 403x (S106x). Thereafter, when a transmission request is made at S101, connection processing to a destination is performed (S107x).

The telephone number, the SAI acquired time, and the SAI that are stored in the storage module 403x are regularly transmitted by the management center 500, or, acquired in accordance with a request from the management center 500 (S108).

In this way, it is possible to notify the VLR 400a and a management center 500 of the location information of the mobile station by using the initial UE message, but is not limited thereto. For example, as a modification of the present embodiment, the communication controlling module 302 may use a location report signal in place of the initial UE message to notify of the temporary ID and the location information of the mobile station 100 during handover. The location report signal is a signal specified in the 3GPP, TS25.413. In that case, the exchange 400 is configured, as a matter of course, to be capable of receiving the location report signal.

Next, an operation and effect of the communications system 10 thus configured will be described. In the RNC 300 of the communications system 10 of the present embodiment, when performing communication connection processing to a mobile station 100 among a plurality of mobile stations 100, the communication controlling module 302 acquires the sector ID where the mobile station 100 is being located. Then, the communication controlling module 302 transmits the SAI of the mobile station 100 to the VLR 400a when performing communication connection to the mobile station 100. The SAI may be replaced with information (GAI) indicating an approximate location in a sector where the mobile station 100 is being located.

On the other hand, in the VLR 400a, the communication controlling module 401x receives the SAI transmitted from the RNC 300 and the storage module 403x stores the received SAI. Then, in response to a request from the management center 500, the VLR 400a transmits the SAI stored in the storage module 403x. Thereby, it is possible to transmit the SAI of the mobile station 100 when communication is connected between the RNC 300 and the VLR 400a and it is possible to gather the SAI in the VLR 400a without imposing a load on network traffic. The number of VLR 400a is generally smaller than that of RNC 300 and it is only necessary to access the VLR 400a to collect the SAI, therefore, it is possible to reduce a load on the network when the SAI of each mobile station is collected.

Here, in the RNC 300, by including the SAI of the mobile station 100 in the initial UE message to be transmitted in communication connection processing to the VLR 400a, the communication controlling module 302 is capable of gathering the SAI of the mobile station 100 in the VLR 400a, further without imposing a load on the network.

The present embodiment is described on the assumption that the third generation cellular phone (3G) system is used, but may also be applicable to the global system for mobile communications (GSM).

### [Third Embodiment]

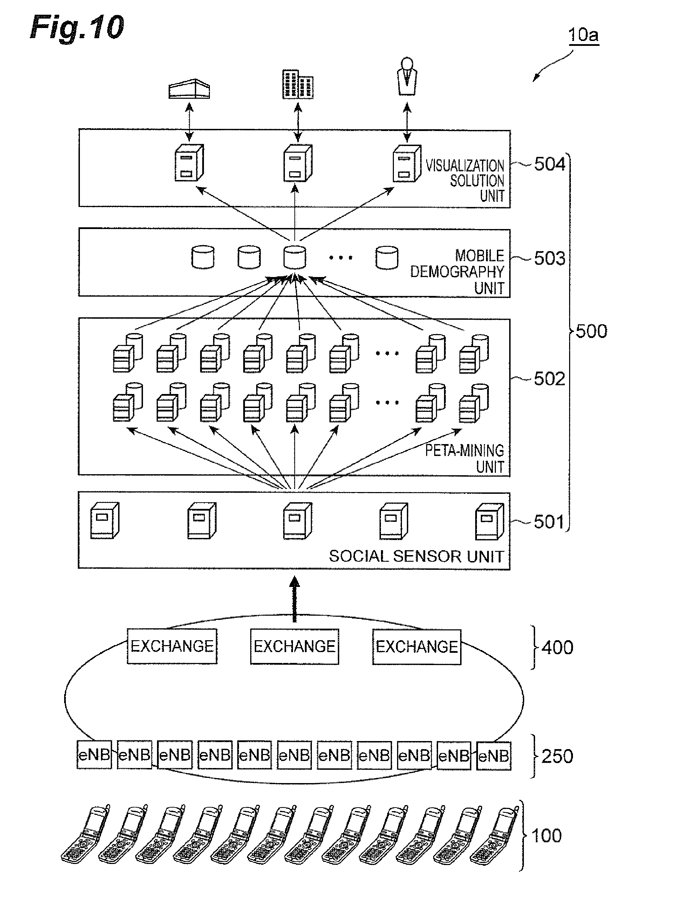

Fig. 10 is a system block diagram of a communications system 10a of the present embodiment. As illustrated in Fig. 10, the communications system 10a is a system configuration when applied to a new communications method, a long term evolution (LTE) and is configured to include mobile stations 100, evolution node Bs (eNBs) 250, exchanges 400 and a management center 500. Moreover, the management center 500 is configured by social sensor units 501, peta-mining units 502, mobile demography units 503 and visualization solution units 504. Each of the eNBs 250 is a communication control apparatus that includes both functions of the BTS 200 and the RNC 300.

The third embodiment is a system configuration when applied to the LTE. Since specific processing contents thereof are similar to those of the first embodiment and the second embodiment described above, detailed explanation is omitted here. The radio access network application part (RANAP) is used as a protocol in the first embodiment and the second embodiment, while the S application protocol (S1AP) used for the LTE is used in the third embodiment. As for the initial UE message, the same signal is also used in the S1AP.

### [Fourth Embodiment]

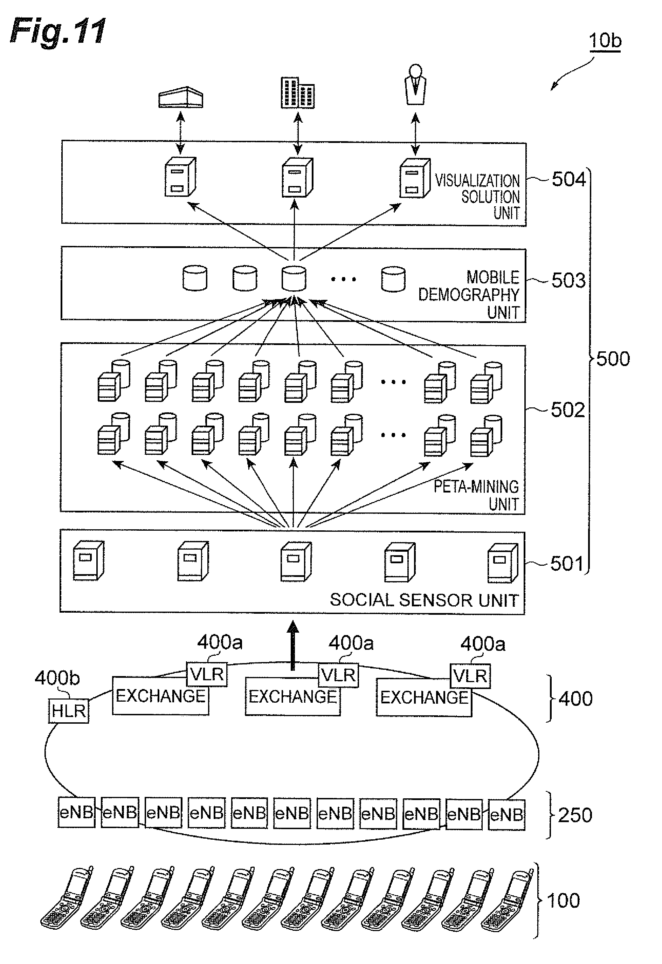

Fig. 11 is a system block diagram of a communications system 10b of the present embodiment. As illustrated in Fig. 11, the communications system 10b is a system configuration when applied to the new communications method, a long term evolution (LTE) and is configured to include mobile stations 100, evolution nodes B (eNBs) 250, exchanges 400 and a management center 500. In the present embodiment, each of the exchanges 400 includes a visitor location register (VLR) 400a. The VLR 400a is a management apparatus for storing and managing location information of the mobile station 100 and is capable of managing each mobile station 100 by acquiring and storing subscriber information stored in a HLR 400b. Moreover, the management center 500 is configured by social sensor units 501, peta-mining units 502, mobile demography units 503 and visualization solution units 504. Each of the eNBs 250 is a communication control apparatus that includes both functions of the BTS 200 and the RNC 300.

The fourth embodiment is a system configuration when applied to the LTE. Since specific processing contents thereof are similar to those of the first embodiment and the second embodiment described above, detailed explanation is omitted here. A radio access network application part (RANAP) is used as a protocol in the first embodiment and the second embodiment, while a S1 application protocol (S1AP) used for the LTE is used in the fourth embodiment. As for the initial UE message, the same signal is also used in the S1AP.

## Claims

1. A communications system comprising:
a plurality of communication control apparatuses for controlling wireless connection to a plurality of mobile stations; and
a management apparatus for managing the communication control apparatus, wherein
the communication control apparatus comprises:
positioning means for measuring location of a mobile station, when communication is connected to the mobile station among the plurality of mobile stations; and
transmitting means at a communication control apparatus side for transmitting, when communication is connected to the mobile station, location information of the mobile station measured by the positioning means to the management apparatus,
the management apparatus comprises:
receiving means for receiving the location information transmitted by the transmitting means;
storage means for storing the location information received by the receiving means; and
transmitting means at a management apparatus side for transmitting the location information stored in the storage means in response to a request from an external server or at a given timing.

2. The communications system according to claim 1, wherein the management apparatus is an exchange.

3. The communications system according to claim 1, wherein, the management apparatus is a subscriber information management apparatus.

4. The communications system according to any one of claims 1 to 3, wherein
the transmitting means at the communication control apparatus side transmits the location information by including the location information of the mobile station in an initial UE message.

5. The communications system according to any one of claims 1 to 4, wherein
the transmitting means at the communication control apparatus side transmits the location information during handover by including the location information of the mobile station in a location report signal.

6. The communications system according to any one of claims 1 to 5, wherein
the transmitting means at the communication control apparatus side in the communication control apparatus transmits an ID for identifying the mobile station in association with the location information to the management apparatus,
the receiving means at the management apparatus receives the ID together with the location information,
the management apparatus further comprises:
subscriber information storage means for storing subscriber information having the ID and a telephone number in association with each other; and
converting means for converting the ID received by the receiving means to the telephone number based on the subscriber information stored in the subscriber information storage means, and
the storage means stores the telephone number converted by the converting means together with the location information.

7. The communications system according to any one of claims 1 to 6, wherein
the subscriber information storage means further stores a positioning time in an associated manner.

8. The communications system according to any one of claims 1 to 7, wherein
the location information is represented by coordinate information in a sector.

9. A communications method executed on a communications system including a plurality of communication control apparatuses for controlling wireless connection to a plurality of mobile stations, and a management apparatus for managing the communication control apparatus, wherein
the communication control apparatus comprises:
a positioning step of measuring location of a mobile station, when communication is connected to the mobile station of the plurality of mobile stations; and
a transmitting step at a communication control apparatus side of transmitting, when communication is connected to the mobile station, location information of the mobile station measured by the positioning means to the management apparatus,
the management apparatus comprises:
a receiving step of receiving the location information transmitted at the transmitting step;
a storage step of storing the location information received at the receiving step in storage means; and
a transmitting step at a management apparatus side of transmitting the location information stored in the storage means in response to a request from an external server.

10. A communications system comprising:
a plurality of communication control apparatuses for controlling wireless connection to a plurality of mobile stations; and
a management apparatus for managing the communication control apparatus, wherein
the communication control apparatus comprises:
acquiring means at a communication control apparatus side for acquiring, based on communication connection processing to a mobile station, location information of the mobile station; and
transmitting means at the communication control apparatus side for transmitting, when the mobile station performs communication connection processing, the location information of the mobile station acquired by the acquiring means at the communication control apparatus side to the management apparatus,
the management apparatus comprises:
receiving means at a management apparatus side for receiving the location information transmitted by the transmitting means;
storage means for storing the location information received by the receiving means at the management apparatus side; and
transmitting means at the management apparatus side for transmitting the location information stored in the storage means in response to a request from an external server or at a given timing.

11. The communications system according to claim 10, wherein the management apparatus is an exchange.

12. The communications system according to claim 10, wherein
the management apparatus is a subscriber management apparatus.

13. The communications system according to claim 12, wherein the location information is a sector ID.

14. A communications method executed on a communications system including a plurality of communication control apparatuses for controlling wireless connection to a plurality of mobile stations, and a management apparatus for managing the communication control apparatus and subscriber information of the plurality of mobile stations, wherein
the communication control apparatus comprises:
an acquiring step at a communication control apparatus side of acquiring, based on communication connection processing to a mobile station, location information of the mobile station; and
a transmitting step at the communication control apparatus side of transmitting, when the mobile station performs communication connection processing, the location information of the mobile station acquired at the acquiring step at the communication control apparatus side to the management apparatus,
the management apparatus comprises:
a receiving step at a management apparatus side of receiving the location information transmitted at the transmitting step;
a storage step of storing the location information received at the receiving step at the management apparatus side; and
a transmitting step at the management apparatus side of transmitting the location information stored at the storage step in response to a request from an external server or at a given timing.
